# EUROPEAN PATENT SPECIFICATION

(11) **EP 3 437 805 B1**
(45) Date of publication and mention of the grant of the patent: **19.07.2023**
(21) Application number: 17194741.9
(22) Date of filing: 04.10.2017
(51) Int. Cl.: B25J 9/16

(54) **ROBOT STOPPING DISTANCE SIMULATING METHOD**
ROBOTERSTOPPWEGSIMULATIONSVERFAHREN
PROCÉDÉ DE SIMULATION DE LA DISTANCE D'ARRÊT D'UN ROBOT

(30) Priority: 02.08.2017 EP 17184384
(43) Date of publication of application: 06.02.2019
(73) Proprietor: ABB Schweiz AG, 5400 Baden (CH)
(72) Inventor: Kirsten, Rene, 35463 Fernwald (DE); Schauer, Moritz, 35463 Fernwald (DE)
(74) Representative: Maiwald GmbH

(56) References cited:
- EP-A1- 2 292 388
- Bjoern Matthias: "ISO/TS 15066 - Collaborative Robots - Present Status", , 1 March 2015 (2015-03-01), pages 1-23, XP055472340, Retrieved from the Internet: URL:https://www.researchgate.net/publicati on/282809861_ISOTS_15066_-_Collaborative_R obots_-_Present_Status [retrieved on 2018-05-03]
- A. BAUMS ET AL: "Response time of a mobile robot", AUTOMATIC CONTROL AND COMPUTER SCIENCES., vol. 47, no. 6, 1 November 2013 (2013-11-01), pages 352-358, XP055472355, US ISSN: 0146-4116, DOI: 10.3103/S0146411613060023
- JOSÉ SAENZ ET AL: "Safeguarding Collaborative Mobile Manipulators - Evaluation of the VALERI Workspace Monitoring System", PROCEDIA MANUFACTURING, vol. 11, 1 June 2017 (2017-06-01), pages 47-54, XP055472360, ISSN: 2351-9789, DOI: 10.1016/j.promfg.2017.07.129
- Sandor Szabo ET AL: "A Testbed for Evaluation of Speed and Separation Monitoring in a Human Robot Collaborative Environment", National Institute of Standards and Technology, 1 March 2012 (2012-03-01), XP055472373, Gaithersburg, MD DOI: 10.6028/NIST.IR.7851 Retrieved from the Internet: URL:https://ws680.nist.gov/publication/get _pdf.cfm?pub_id=910293 [retrieved on 2018-05-03]

## Description

The present invention relates to a method of simulating the stopping distance of a robot.

In order to ensure the safety of staff who work in the vicinity of an industry robot, the operating space of such robots is often confined by a barrier such as metal grids, fencing or the like, which can prevent the staff from inadvertently entering the robot's operating space and being hit by it. The space inside such a barrier should not be larger than necessary for the robot to execute its work program, in order to ensure maximum freedom of displacement for the staff outside the barrier and, if necessary, to facilitate interaction between the staff and the robot.

If the confined space is smaller than the reach of the robot, appropriate measures must be taken to prevent the robot, e.g. in case of wrong programming or a technical failure, from hitting the barrier and knocking it over or punching through it.

One such measure is the provision of sensors, such as light curtains, which monitor the movement of the robot and trigger an emergency stop when the robot comes too close to the barrier. The main difficulty with such sensors is to define how close "too close" is. Since the robot cannot stop on the spot, the distance between a virtual boundary where the emergency stop is triggered and the barrier must be large enough to allow the robot to come to a halt before it touches the barrier, on the other hand, the freedom of movement of the robot should not be impaired more than necessary by the virtual boundary. However, the actual stopping distance of the robot depends on many factors. Generally, the stopping distance of an upward movement will be shorter than that of a downward one. In a conventional articulated robot comprising a plurality of rod-shaped links interconnected by joints, the stopping distance will be larger in an outstretched configuration than in a contracted one, since the leverage of distal portions of the robot (and, eventually, of payload carried by it) is larger in the outstretched configuration. Therefore, whenever a working environment for a robot is set up which comprises such a virtual boundary, it is conventional to check by simulation whether the distance between the virtual boundary and the barrier is sufficient to prevent contact of the robot with the barrier.

There are simulation tools available which are capable of simulating with high accuracy the movement of a robot resulting from given control inputs under normal operating conditions, but it turns out that these systematically tend to underestimate the braking distance in case of an emergency stop, especially when other safety equipment is connected as well.

Bjoern Matthias: "ISO/TS 15066 Collaborative Robots - Present Status", 1 March 2015 (2015-03-01), pages 1-23, XP055472340, discloses an overview on collaborative robots.

A. BAUMS ET AL: "Response time of a mobile robot" AUTOMATIC CONTROL AND COMPUTER SCIENCES., vol. 47, no. 6, 1November 2013 (2013-11-01), pages 352-358, XP055472355 describes analytical expressions for estimating the response time for fully autonomous robots that are controlled by and interact with a human.

JOSÉ SAENZ ET AL: "Safeguarding Collaborative Mobile Manipulators - Evaluation of the VALERI Workspace Monitoring System", PROCEDIA MANUFACTURING, vol. 11, 1 June 2017 (2017-06-01), pages 47-54, XP055472360 describes the development of a 2 ½ D workspace monitoring system for safeguarding tools when working in close proximity to human operators.

Sandor Szabo et al: "A Testbed for Evaluation of Speed and Separation Monitoring in a Human Robot Collaborative Environment", doi:10.6028/ NIST.IR.7851, XP055472373, gives an overview of the Speed and Separation Monitoring testbed system.

EP2292388 discloses a method and device for bringing a manipulator to a standstill.

The object of the present invention is to provide a method of simulating the movement of a robot that can prevent a robot from entering a forbidden region while making a braking region extending between a roaming region of the robot and said forbidden region not wider than necessary.

This object is achieved by a method of claim 1. Preferred embodiments are covered by the dependent claims.
- Fig. 1: schematically illustrates a robot system according to the invention.
- Fig. 2: is a simulation system.
- Fig. 3: is a flowchart of a method for calibrating a simulation of the robot system of Fig.1; and
- Fig. 4: is a flowchart of a method of simulating the robot system.

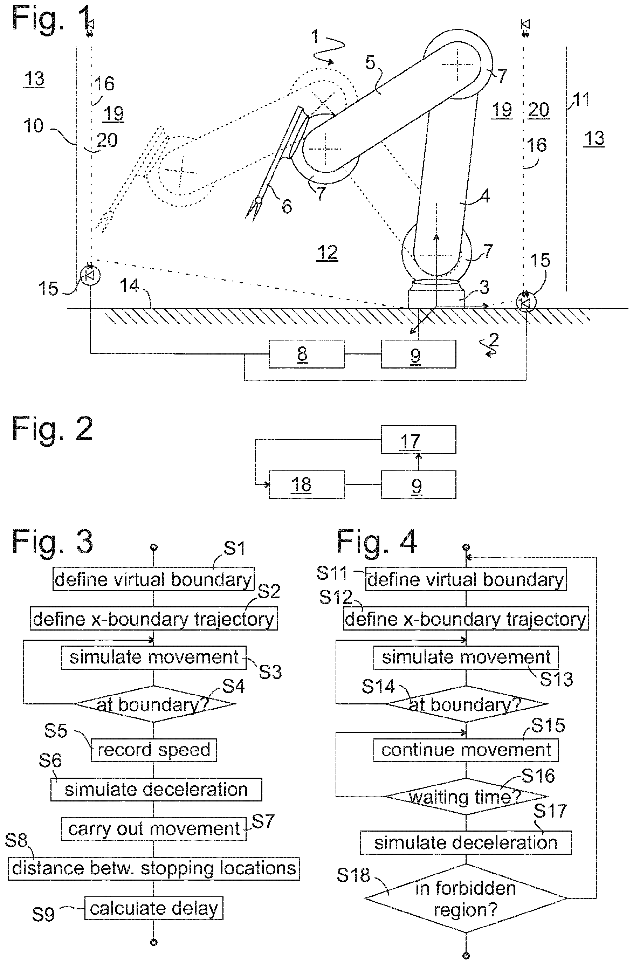

Fig. 1 illustrates a robot system comprising a robot 1 and its associated controller 2. The robot 1 comprises a base 3, several links 4, 5, an end effector 6 and several joints 7 which connect the links to one another, to the base 3 and to the end effector and are rotatable by one or two axes. As usual in the art, actuators for driving the rotation are hidden inside the links, the joints or the base 3. The joints 7 further comprise rotary encoders associated to each axis, which provide the controller 2 with data on the orientation of the links. The set of angles detected by these rotary encoders defines the posture of the robot 1.

Although the controller 2 may be implemented on a single computer, it can be regarded as comprising at least two layers, a top layer 8 which decides on a trajectory the end effector 6 has to follow in order to accomplish a given task, and a bottom layer which will be referred to here as an actuator controller 9, which receives data specifying the trajectory to follow from the top layer 8 and transforms these data into commands which define for each actuator of the robot 1 the torque it has to generate and/or the speed at which it has to run in order to have the end effector 6 move on said trajectory.

The actuators can be assumed to be electrical machines which can be controlled by the actuator controller 9 to operate either in motor mode, maintaining or accelerating a movement of the robot, or in generator mode, decelerating it. In addition to the actuators, friction brakes may be provided at each joint.

The method of the invention will be described in the following assuming that the robot 1 is decelerated by the actuators operating in generator mode, but it should be understood that the method is applicable to deceleration by friction braking, as well.

The environment in which the robot 1 is operating is divided by real or virtual barriers 10, 11 into a region 12 where the robot 1 is allowed to operate, and a forbidden region 13 which it must not enter. As shown in Fig. 1, the distance between the base 3 and the forbidden region 13 is not the same in all directions. While at the left of the base 3 the distance to the barrier 10 is quite large, so that the robot 1 can pass it only if it extends almost straight towards the forbidden region 13, the distance to the barrier 11 on the right is considerably smaller. In the nearly straight configuration of the robot shown in phantom in Fig.1, the speed at which the end effector can approach the barrier 10 is quite small, even if the rotation speeds at the joints 7 of the robot are high. In contrast, to the right, the barrier 11 can be hit at rather high speed by the elbow joint 7 between links 4 and 5 if link 4 rotates clockwise, or by the end effector 6 if the robot 1 stretches towards the right. In order to ensure that the robot will never pass the barriers 10, 11, deceleration of the robot 1 must begin in a safe distance from the barriers 10, 11, so that the robot 1 can be brought to a halt before actually reaching any of the barriers 10, 11. Such a safe distance will have to be larger in case of barrier 11 than in case of barrier 10.

Another barrier the robot 1 must not reach with non-zero velocity is a ground plane 14 on which the base 3 is installed. Since the leverage of the robot 1 with respect to the base 3 is the larger, the farther the robot 1 is stretched in the horizontal direction, a safe distance from the ground plane 14 will have to increase with the distance from the base 3.

In the system of Fig. 1, the robot 1 is prevented from hitting the barriers 10, 11 by sensors 15, e.g. light curtains, which detect any part of the robot 1 which trespasses a virtual boundary 16 in front of the barriers 10, 11, and notify the top layer 8 of the incident, so that the top layer 8 may control an emergency stop procedure of the robot.

A method for finding out which distance the virtual boundary 16 must have from the barriers will now be described referring to the flowcharts of Fig. 3 and 4.

Motion simulators which can simulate with good precision the reaction of the robot to trajectory data input to the actuator controller 8, i.e. which simulate the robot 1 and the actuator controller 8, are known. Any such motion simulator can be used in the context of the present invention; therefore the motion simulator as such will not be described in detail here.

Initially, it may be doubted whether the motion simulator is as accurate in simulating a stopping distance procedure as it is in simulating normal operation. In order to verify this, a simulation system is set up as shown in Fig. 2 in which the motion simulator, 17, replaces the actuator controller 9 of Fig. 1, the top layer is the same as in the actual robot system of Fig. 1, and the sensors 15 are replaced by a virtual sensor 18 which receives data on current simulated angles of the joints 7 from motion simulator 17, calculates from these and from known dimensions of the links 4, 5 and the end effector 6 a current shape of the robot 1 and checks whether this shape intersects a given virtual boundary 16.

Referring now to figure 3, the virtual boundary 16 is defined in step S1, e.g. by a user specifying it to the top layer. This virtual boundary 16 can be located quite arbitrarily, it may but doesn't have to be related to a barrier 10, 11; in fact the method of Fig. 3 can be carried out before any barriers are set up.

In step S2, a trajectory of the robot 1 is defined which will take it across said virtual boundary 16. Defining this trajectory can also be done by a user; preferably, it is done automatically by the top layer 7.

In step S3, data of the trajectory are consecutively fed to the motion simulator 17; motion simulator 17 calculates the angles assumed by the various joints 7 of the robot 1 in the course of the trajectory and supplies these to virtual sensor 18. This is done continuously until virtual sensor 18 detects a violation of virtual boundary 16 in step S4.

When the boundary violation is detected, the current speed of the offensive member of the robot (in most cases it will be the end effector, but it might also be an intermediate joint) is recorded in step S5. This speed can be provided directly by motion simulator 17; if the motion simulator 17 is not programmed to do it, the speed can also be calculated by virtual sensor 18 based on recent joint 7 angle data.

In step S6, the top layer 9 reacts to the boundary violation notified by the virtual sensor 18 just as it would do if it came from the physical sensor 8. The reaction can be to replace the trajectory it controlled up to that instant by a trajectory in which the offensive member continues to move in the direction it had when it reached the virtual boundary 16 but in which the actuators are decelerated as strongly as is compatible with this direction. Based on the posture of the robot 1 at the time it reached the virtual boundary, the speeds of its various displaceable components 4, 5, 6 and the coordinates of the replacement trajectory supplied by the top layer 8, the motion simulator 17 simulates the emergency stopping procedure. The position in which the simulated robot comes to a halt is recorded.

The top layer 9 controls the physical robot 1 to move by the same trajectory in step S7. A violation of the virtual boundary 16 is detected by sensor 8, causing the top layer to carry out the same emergency stop process as in step S6. The stopping positions obtained in steps S6 and S7 are compared in step S8. The distance between these positions, divided by the speed recorded in step S4, yields a delay. As explained above, this delay may be due to various causes, such as a reaction delay of the physical sensor 8, a delay of the actuator controller 9 in reacting to a change of trajectory by the upper layer 8, etc. The actual reasons for the delay are not important here. If the method of Fig. 3 is carried out for a large number of trajectories, and the average Δt of the delays obtained for these trajectories is positive, there is a systematic inaccuracy in the way the motion simulator 17 simulates an emergency stop procedure, and this systematic inaccuracy can be compensated by the method of Fig. 4.

For the description of this method it is assumed that the robot 1 is installed in an environment which is divided by physical or virtual barriers 10, 11 into allowed and forbidden regions 12, 13. In step S11, a virtual boundary 16 is defined which divides the allowed region into a roaming region 19 in which the robot 1 is free to move and a braking region 20 extending between the roaming region 19 and the forbidden region 12, in which the robot will be braked by an emergency stop procedure whenever it enters, in order to keep it from entering the forbidden region 12.

In step S12, just as in S2, a trajectory is defined which crosses the virtual boundary 16. Steps S13, S14 are identical to above steps S3, S4, too. However, when the simulated movement of the robot is found to violate the virtual boundary 16 in step S14, instead of immediately starting to simulate the emergency stop procedure, the top layer continues (S15) to simulate the original trajectory during a time interval of the length Δt determined as described above by the method of Fig. 4. Only when this time interval is over in step S16 does the top layer initiate the simulation of the emergency stopping distance procedure in step S17, which is identical to S6. Due to the delay, the simulation of S17 now yields stopping positions of the robot 1 which do not systematically deviate from those found in the real-world system.

If the stopping position of step S17 is found to be in the forbidden region 12 in step S18, the method returns to step S11, and, when redefining the virtual boundary in step S11, increases the distance between the virtual boundary 16 and the barrier 10, 11 at least in the vicinity of the point where the trajectory crossed the virtual boundary 16.

At the start of the method of Fig. 4, the distance between the virtual boundary 16 and the barrier 10, 11 may be chosen absolutely insufficient; in the simplest case both can be chosen identical. By iterating the method for a sufficient number of trajectories, the virtual boundary 16 will gradually be moved away from the barrier 10, 11 and will converge towards a distance which is large enough to prevent the robot 1 from reaching the barrier 10, 11.

### References

- 1: robot
- 2: controller
- 3: base
- 4: link
- 5: link
- 6: end effector
- 7: joint
- 8: top layer
- 9: actuator controller
- 10: barrier
- 11: barrier
- 12: allowed region
- 13: forbidden region
- 14: ground plane
- 15: sensor
- 16: virtual boundary
- 17: motion simulator
- 18: virtual sensor
- 19: roaming region
- 20: braking region

## Claims

1. A method of simulating the stopping distance of a robot (1) which comprises a base (3), links (4, 5), an end effector (6) and several joints (7) rotatably connecting the base (3), the links (4, 5), and the end effector (6), and wherein the robot is installed in an environment, wherein the environment comprises an operating space of the robot confined by one or more barriers (10, 11), the operating space comprising a roaming region (19) in which the robot is free to move and a braking region (20), the environment further including, a forbidden region (13) outside the operating space which the robot (1) must not enter, and wherein the braking region (20) extends between the roaming and forbidden regions (19, 13), a virtual boundary (16) dividing the roaming and braking regions (19, 20), the method using means (15, 18) for monitoring the virtual boundary (16) and triggering an emergency stop procedure of the robot (1) when the robot (1) passes the boundary from the roaming region (19) to the braking region (20), the method comprising the steps of:
a) defining (S11) the virtual boundary,
b) determining (S12) a trajectory of the robot (1), which will take it across the virtual boundary (16),
c) simulating (S13) the trajectory of the robot (1),
d) determining (S14) an instant when the robot (1) passes the boundary (16),
e) allowing (S16) a predetermined waiting time to pass after step a), and when said waiting time has passed,
f) determining (S17) an initial posture and speeds of the robot (1) at the beginning of the emergency stop procedure,
g) calculating (S17), based on said initial posture and speeds and an estimated deceleration, a final posture at which the robot (1) comes to a stop,
h) if (S18) the final posture of the robot (1) was in the forbidden region (13), iterating the method by returning to step a), wherein the virtual boundary (16) is redefined by advancing the virtual boundary (16) into the roaming region (19).

2. The method of claim 1, wherein the waiting time is at least 1 ms.

3. The method of claim 1 or 2, wherein the means for monitoring the virtual boundary (16) is a sensor (15), and the waiting time is at least a reaction time of the sensor (15) .

4. The method of any of the preceding claims, wherein the robot (1) comprises an end effector (6), a base (3), a plurality of links (4, 5), a plurality of joints (7) which pivotably connect the links (4, 5) to one another, to the end effector (6) and to the base (3), a plurality of actuators for driving a rotation of the joints (7) and an actuator controller (9) which is input a planned trajectory of the end effector (6) and outputs control data to the actuators by which the actuators are coordinated to move the end effector (6) along said trajectory,
wherein the actuator controller (9) is input a trajectory leading into the braking region (20), step a) occurs while the actuator controller (9) is leading the end effector along said trajectory and during step b) the actuator controller (9) continues (S15) to lead the end effector (6) along said trajectory.

5. The method of claim 4, wherein the waiting time is at least the processing time of the actuator controller (9) between the instant in which a data item defining a section of the trajectory is received by the controller and the instant in which control data by which the end effector (6) is led along said trajectory section are output by the actuator controller (9).

## Patentansprüche

1. Verfahren zum Simulieren des Stoppwegs eines Roboters (1), der eine Basis (3), Verbindungsglieder (4, 5) einen Endeffektor (6) und mehrere Gelenke (7), die die Basis (3), die Verbindungsglieder (4, 5) und den Endeffektor (6) rotatorisch verbinden, umfasst, und wobei der Roboter in einer Umgebung installiert ist, wobei die Umgebung einen Betriebsraum des Roboters umfasst, der durch eine oder mehrere Barrieren (10, 11) begrenzt ist, wobei der Betriebsraum eine freie Bewegungsregion (19), in der sich der Roboter frei bewegen kann, und eine Abbremsregion (20) umfasst, wobei die Umgebung ferner eine verbotene Region (13) außerhalb des Betriebsraums umfasst, in die der Roboter (1) nicht eintreten darf, und wobei sich die Abbremsregion (20) zwischen der freien Bewegungsregion und der verbotenen Region (19, 13) erstreckt, wobei eine virtuelle Grenze (16) die freie Bewegungsregion und die Abbremsregion (19, 20) trennt, wobei das Verfahren Mittel (15, 18) zum Überwachen der virtuellen Grenze (16) und Auslösen einer Notstoppprozedur des Roboters (1) verwendet, wenn der Roboter (1) die Grenze von der freien Bewegungsregion (19) zur Abbremsregion (20) passiert, wobei das Verfahren die folgenden Schritte umfasst:
a) Definieren (S11) der virtuellen Grenze,
b) Bestimmen (S12) einer Trajektorie des Roboters (1), die ihn über die virtuelle Grenze (16) bringt,
c) Simulieren (S13) der Trajektorie des Roboters (1),
d) Bestimmen (S14) eines Moments, in dem der Roboter (1) die Grenze (16) passiert,
e) Erlauben (S16), dass nach Schritt a) eine vorbestimmte Wartezeit verstreicht, und wenn die Wartezeit verstrichen ist,
f) Bestimmen (S17) einer anfänglichen Haltung und von Geschwindigkeiten des Roboters (1) am Beginn der Notstoppprozedur,
g) Berechnen (S17), basierend auf der anfänglichen Haltung und den Geschwindigkeiten und einer geschätzten Verlangsamung, einer abschließenden Haltung, bei der Roboter (1) zum Stehen kommt,
h) wenn (S18) die abschließende Haltung des Roboters (1) in der verbotenen Region (13) war, Wiederholen des Verfahrens durch Zurückkehren zu Schritt a), wobei die virtuelle Grenze (16) neu definiert wird durch Vorrücken der virtuellen Grenze (16) in die freie Bewegungsregion (19) .

2. Verfahren nach Anspruch 1, wobei die Wartezeit mindestens 1 ms ist.

3. Verfahren nach Anspruch 1 oder 2, wobei das Mittel zum Überwachen der virtuellen Grenze (16) ein Sensor (15) ist und wobei die Wartezeit mindestens eine Reaktionszeit des Sensors (15) ist.

4. Verfahren nach einem der vorhergehenden Ansprüche, wobei der Roboter (1) einen Endeffektor (6), eine Basis (3), mehrere Verbindungsglieder (4, 5), mehrere Gelenke (7), die die Verbindungsglieder (4, 5) miteinander, mit dem Endeffektor (6) und mit der Basis (3) schwenkbar verbinden, mehrere Aktuatoren zum Antreiben einer Rotation der Gelenke (7) und eine Aktuatorsteuerung (9), in die eine geplante Trajektorie des Endeffektors (6) eingegeben wird und die Steuerungsdaten an die Aktuatoren ausgibt, durch die die Aktuatoren koordiniert werden, um den Endeffektor (6) entlang der Trajektorie zu bewegen, umfasst,
wobei in die Aktuatorsteuerung (9) eine Trajektorie eingegeben wird, die in die Abbremsregion (20) führt, wobei Schritt a) auftritt, während die Aktuatorsteuerung (9) den Endeffektor entlang der Trajektorie führt, und wobei während Schritt b) die Aktuatorsteuerung (9) fortfährt (S15), den Endeffektor (6) entlang der Trajektorie zu führen.

5. Verfahren nach Anspruch 4, wobei die Wartezeit mindestens die Verarbeitungszeit der Aktuatorsteuerung (9) zwischen dem Moment, in dem ein Datenelement, das einen Abschnitt der Trajektorie definiert, durch die Steuerung empfangen wird, und dem Moment, in dem Steuerungsdaten, durch die der Endeffektor (6) entlang des Trajektorieabschnitts geführt wird, durch die Aktuatorsteuerung (9) ausgegeben werden, ist.

## Revendications

1. Procédé de simulation de la distance d'arrêt d'un robot (1) qui comprend une base (3), des segments de robot (4, 5), un organe terminal effecteur (6) et plusieurs articulations (7) reliant de façon rotative la base (3), les segments de robot (4, 5), et l'organe terminal effecteur (6), et dans lequel le robot est installé dans un environnement, dans lequel l'environnement comprend un espace d'action du robot, confiné par une ou plusieurs barrières (10, 11), l'espace d'action comprenant une région d'itinérance (19) dans laquelle le robot est libre de se déplacer et une région de freinage (20), l'environnement incluant en outre une région interdite (13), à l'extérieur de l'espace d'action, dans laquelle le robot (1) ne doit pas entrer, et dans lequel la région de freinage (20) s'étend entre les régions d'itinérance et interdite (19, 13), une frontière virtuelle (16) divisant les régions d'itinérance et de freinage (19, 20), le procédé utilisant un moyen (15, 18) pour surveiller la frontière virtuelle (16) et déclencher une procédure d'arrêt d'urgence du robot (1) lorsque le robot (1) franchit la frontière, de la région d'itinérance (19) à la région de freinage (20), le procédé comprenant les étapes suivantes :
a) définir (S11) la frontière virtuelle,
b) déterminer (S12) une trajectoire du robot (1), qui l'emmènera à travers la frontière virtuelle (16),
c) simuler (S13) la trajectoire du robot (1),
d) déterminer (S14) un instant auquel le robot (1) franchit la frontière (16),
e) permettre (S16) à un temps d'attente prédéterminé de s'écouler après l'étape a), et, lorsque ledit temps d'attente s'est écoulé,
f) déterminer (S17) une position initiale et des vitesses du robot (1) au début de la procédure d'arrêt d'urgence,
g) calculer (S17), sur la base desdites position initiale et vitesses et d'un ralentissement estimé, une position finale à laquelle le robot (1) vient s'arrêter,
h) si (S18) la position finale du robot (1) était dans la région interdite (13), répéter le procédé en retournant à l'étape a), dans lequel la frontière virtuelle (16) est redéfinie en faisant avancer la frontière virtuelle (16) dans la région d'itinérance (19).

2. Procédé selon la revendication 1, dans lequel le temps d'attente est d'au moins 1 ms.

3. Procédé selon la revendication 1 ou 2, dans lequel le moyen pour surveiller la frontière virtuelle (16) est un capteur (15), et le temps d'attente est au moins un temps de réaction du capteur (15).

4. Procédé selon l'une quelconque des revendications précédentes, dans lequel le robot (1) comprend un organe terminal effecteur (6), une base (3), une pluralité de segments de robot (4, 5), une pluralité d'articulations (7) qui relient de façon pivotante les segments de robot (4, 5) l'un à l'autres, à l'organe terminal effecteur (6) et à la base (3), une pluralité d'actionneurs pour entraîner une rotation des articulations (7) et une unité de commande d'actionneur (9) qui reçoit en entrée une trajectoire planifiée de l'organe terminal effecteur (6) et qui envoie en sortie des données de commande aux actionneurs par lesquelles les actionneurs sont coordonnées pour déplacer l'organe terminal effecteur (6) le long de ladite trajectoire,
dans lequel l'unité de commande d'actionneur (9) reçoit en entrée une trajectoire conduisant à la région de freinage (20), l'étape a) se produit alors que l'unité de commande d'actionneur (9) en est train de conduire l'organe terminal effecteur le long de ladite trajectoire et, durant l'étape b), l'unité de commande d'actionneur (9) continue (S15) de conduire l'organe terminal effecteur (6) le long de ladite trajectoire.

5. Procédé selon la revendication 4, dans lequel le temps d'attente est au moins le temps de traitement de l'unité de commande d'actionneur (9) entre l'instant auquel un élément de données, définissant une section de la trajectoire, est reçu par l'unité de commande et l'instant auquel des données de commande, par lesquelles l'organe terminal effecteur (6) est conduit le long de ladite section de trajectoire, sont produites en sortie par l'unité de commande d'actionneur (9).
